**Europäisches Patentamt**

(19) **European Patent Office**

**Office européen des brevets**

(11) Numéro de publication: **0 230 174**
**B1**

(12) ## FASCICULE DE BREVET EUROPEEN

(45) Date de publication du fascicule du brevet:
14.06.89

(51) Int. Cl.⁴: **B29C 41/06**

(21) Numéro de dépôt: 86402659.6

(22) Date de dépôt: 01.12.86

(54) Procédé et machine de fabrication de pièces creuses en matière plastique, par moulage par rotation.

(30) Priorité: 02.12.85 FR 8517782

(43) Date de publication de la demande:
29.07.87 Bulletin 87/31

(45) Mention de la délivrance du brevet:
14.06.89 Bulletin 89/24

(84) Etats contractants désignés:
AT BE CH DE ES FR GB GR IT LI LU NL SE

(56) Documents cités:
DE-A- 2 718 077
FR-A- 1 457 209
GB-A- 842 347
US-A- 3 072 965
US-A- 3 217 078
US-A- 3 337 662
US-A- 4 292 015
US-A- 4 294 793

(73) Titulaire: LUCHAIRE S.A., 180, Boulevard Haussmann,
F-75382 Paris Cédex 08(FR)
Titulaire: A.G. INTERNATIONAL S.p.A., Via Goito, 31,
I-10042 Nichelino (Torino)(IT)

(72) Inventeur: Pitavy, Michel, 7 Avenue le Nôtre,
F-92420 Vaucresson(FR)
Inventeur: Chiappino, Mario, Strada Santa Lucia 65,
I-10100 Turin(IT)
Inventeur: Aghemo, Luigi, Strada Val Salice 87,
I-10100 Turin(IT)

(74) Mandataire: Bourgognon, Jean-Marie et al, Cabinet
Flechner 22, Avenue de Friedland, F-75008 Paris(FR)

## Description

La présente invention se rapporte aux procédés et aux machines de fabrication de pièces creuses en matière plastique, selon le préambule des revendications 1 et 4.

On connaît déjà un procédé de fabrication de pièces creuses en matière plastique du type indiqué au préambule de la revendication 1 par le US-A 4 292 015.

Cette technique est avantageuse, car elle ne met pas en œuvre de pression au niveau de la composition polymérisable et des moules.

La mise en rotation du moule, même avec un programme convenable des vitesses de rotation par rapport aux deux axes de rotation, ne donne pas un dépôt de la composition polymérisable d'épaisseur adéquate, sur la paroi intérieure du moule, et ceci particulièrement lorsque la composition se présente sous forme liquide. De plus, certaines matières plastiques, notamment les polyamides, mides, ont, au refroidissement, un retrait proportionnel à la dimension de la pièce et à l'épaisseur de la couche. Lorsque deux parties adjacentes d'une pièce ont des épaisseurs différentes, le retrait peut provoquer des tensions internes engendrant des ondulations ou des plissements à la surface de la pièce. L'aspect de la surface s'en ressent ; en conséquence, ce procédé ne peut pas convenir pour des pièces dont l'aspect de surface est déterminant, par exemple pour des pièces de la carrosserie d'une voiture, telles que les portières et hayons, qui, à l'état monté, apparaissent à la vue.

L'invention pallie cet inconvénient par un procédé de fabrication de pièces creuses en matière plastique qui, pour appliquer une composition polymérisable sur la paroi intérieure du moule, utilise toujours une mise en mouvement du moule, sans faire appel à une pression, avec, en production, les avantages correspondants de simplicité et de sécurité, mais qui permet cependant d'obtenir des pièces légères, ayant une qualité et un aspect de surface tels que l'on peut, après application d'un apprêt et d'une peinture, les utiliser notamment dans l'industrie automobile, et même comme pièces extérieures ou de parement de la carrosserie.

L'invention a donc pour objet un procédé qui consiste à introduire une composition polymérisable à chaud dans un moule chaud fermé, à mettre immédiatement le moule en movement de manière à appliquer la composition sur la paroi intérieure du moule et à l'y polymériser en une pièce creuse. Il est remarquable par les caractéristiques énoncées à la revendication 1.

Ce premier mouvement suivant deux axes perpendiculaires, que l'on désigne ci-dessous par "mouvement orbital", qui n'est donc pas un simple mouvement de va et vient, lequel serait insuffisant, a pour effet de mieux répartir localement la composition polymérisable en l'étalant suivant toutes les directions.

En fonction de la géométrie de la pièce et d'autres paramètres, il peut se produire des inégalités fortuites ou délibérées de l'épaisseur de la paroi de la pièce creuse, mais, grâce au procédé suivant l'invention, on peut maintenir la variation relative de l'épaisseur à une valeur suffisamment faible pour que les différences locales de retrait ne se traduisent pas par des tensions, pouvant engendrer des ondulations à la surface extérieure de cette zone de la pièce finie.

Suivant une variante préférée, la composition polymérisable est une composition liquide. L'effet d'étalement local dans toutes les directions, grâce au mouvement orbital, s'en trouve fortement amélioré. On utilise notamment des compositions polymérisables liquides donnant des polyamides, notamment du polyamide 6 et du polyamide 12.

Le premier stade du procédé suivant l'invention consiste à introduire une composition polymérisable à chaud dans un moule chaud fermé.

Le moule est habituellement en deux ou en plusieurs parties. Il peut être chauffé par tout moyen convenable, par exemple par une chemise d'huile chaude, ou par le placement du moule dans une enceinte chauffée. La température du moule dépend de la nature de la composition polymérisable. Pour une composition se polymérisant en un polyamide, des températures du moule de 140 à 200°C et notamment de 150 à 180°C peuvent être utilisées. On introduit la composition dans le moule par un canal d'introduction amovible.

La composition polymérisable est une composition classique. De préférence, c'est une composition susceptible de se polymériser en un polyamide. Elle comprend dans ce cas un monomère, un catalyseur et un activateur éventuellement additionné de charges et autres additifs, tels que du polyuréthane ou des fibres de verre.

Le monomère est de préférence un lactame. On préfère tout particulièrement le caprolactame ou le laurolactame.

Le catalyseur est habituellement un polyisocyanate, de préférence un diisocyanate, par exemple un diisocyanate d'alcoyle, un diisocyanate d'aryle, un diisocyanate d'alcoylaryle, etc... Le catalyseur est présent en une quantité catalytiquement active, par exemple à raison de 0,5 à 2,5 % parties en poids pour 100 parties en poids du monomère.

L'activateur est habituellement un lactamate de métal alcalin ; il est présent en une quantité active, par exemple à raison de 0,1 à 1 % partie en poids pour 100 parties en poids du monomère.

La quantité de composition polymérisable introduite dans le moule représente avantageusement de 1 % à 15 %, et mieux de 1 % à 5 % du volume de l'empreinte du moule, selon l'épaisseur de la paroi de la pièce creuse à fabriquer, et selon la géométrie de celle-ci.

Dès que l'introduction est terminée, on met le moule en mouvement en lui imprimant le mouvement orbital, combiné de préférence avec les mouvements de basculement et de rotation, pour répartir adéquatement la composition polymérisable sur la paroi intérieure du moule.

En général, la mise en mouvement dure de 100 à 300 secondes. On interrompt ensuite la mise en mouvement du moule. On peut, le cas échéant, répéter l'opération d'introduction de la composition et de mise en mouvement pour plusieurs polymérisations successives. On refroidit le moule jusqu'à une température, par exemple comprise entre 70°C et 120°C, à laquelle la pièce est suffisamment rigide pour être démoulée. On ouvre le moule et on en extrait la pièce.

L'invention vise également une machine de fabrication d'une pièce creuse en matière plastique, telle que définie aux revendications 4 à 6.

Pour bien répartir la composition dans toutes les directions, il convient que la verticale, passant par le centre du cercle ou de l'ellipse le long duquel s'effectue le déplacement du moule suivant le premier mouvement, passe dans le moule.

Grâce à l'invention, on est parvenu, pour la première fois, à fabriquer un élément creux, en matière plastique, de la robe d'un véhicule automobile, notamment un hayon ou une portière, d'un seul tenant, dont l'aspect de surface, après application d'un apprêt et d'une couche de peinture, satisfait aux exigences imposées par les constructeurs de véhicules automobiles.

Au dessin annexé, donné uniquement à titre d'exemple :

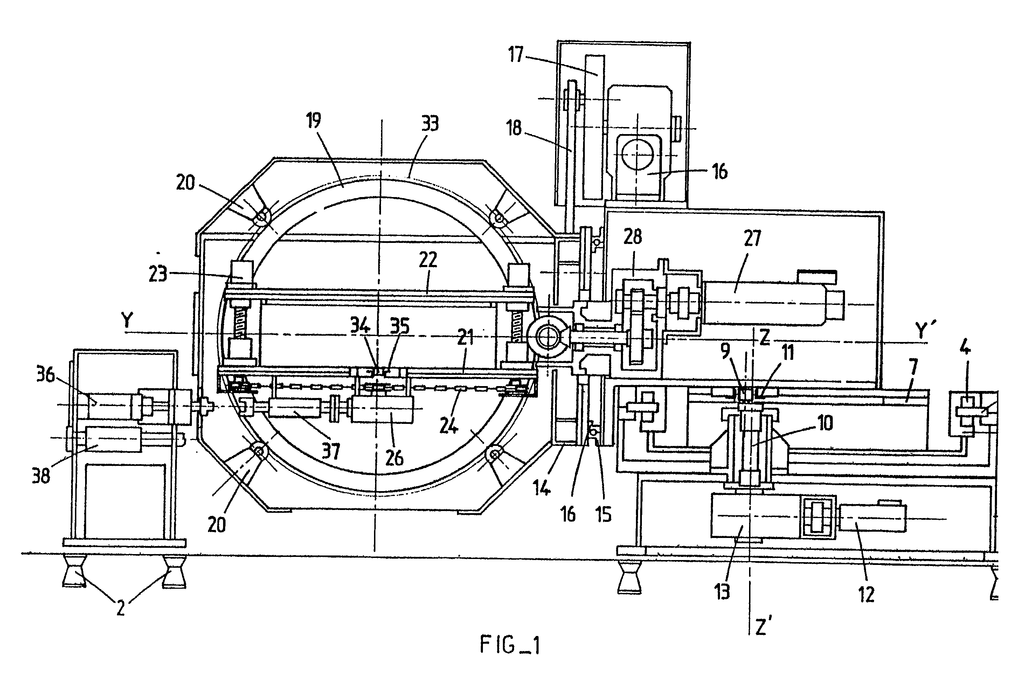

La figure 1 est une vue en coupe d'une machine suivant l'invention ;

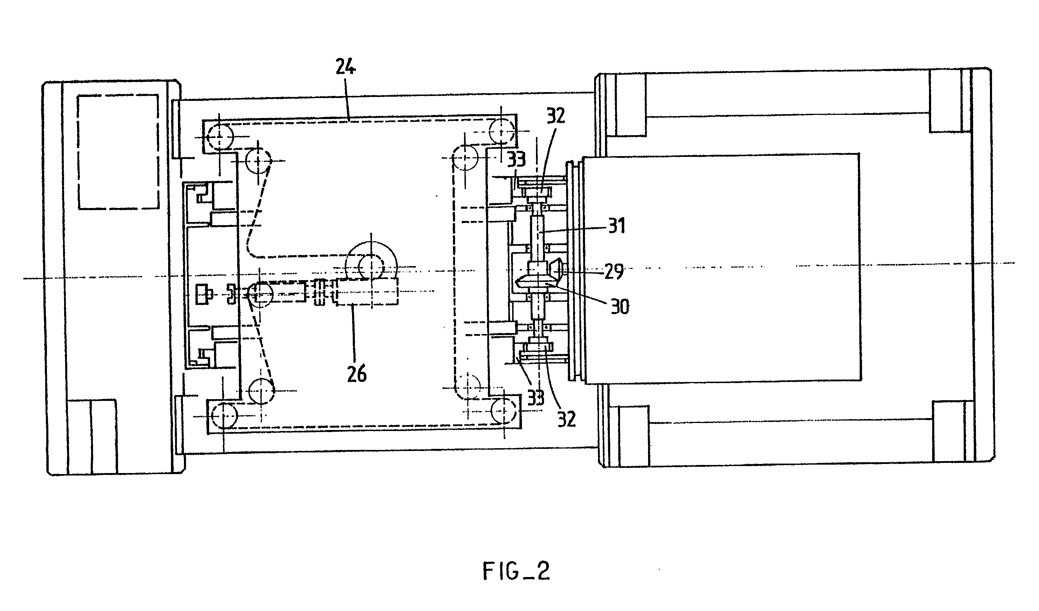

La figure 2 est une vue en plan de la machine de la figure 1 ;

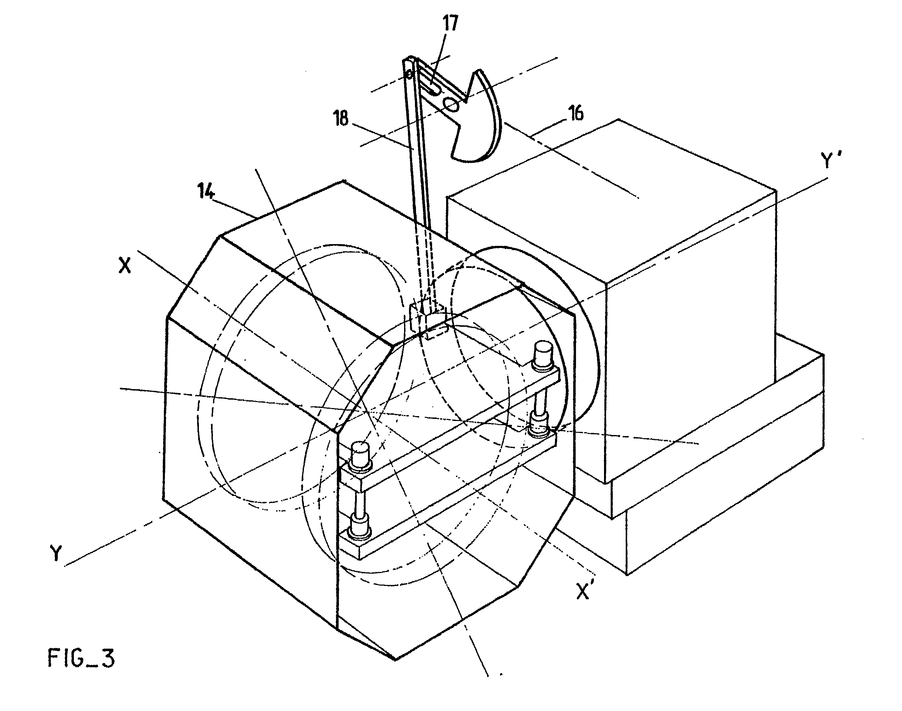

La figure 3 est une vue schématique en perspective de la machine suivant l'invention ;

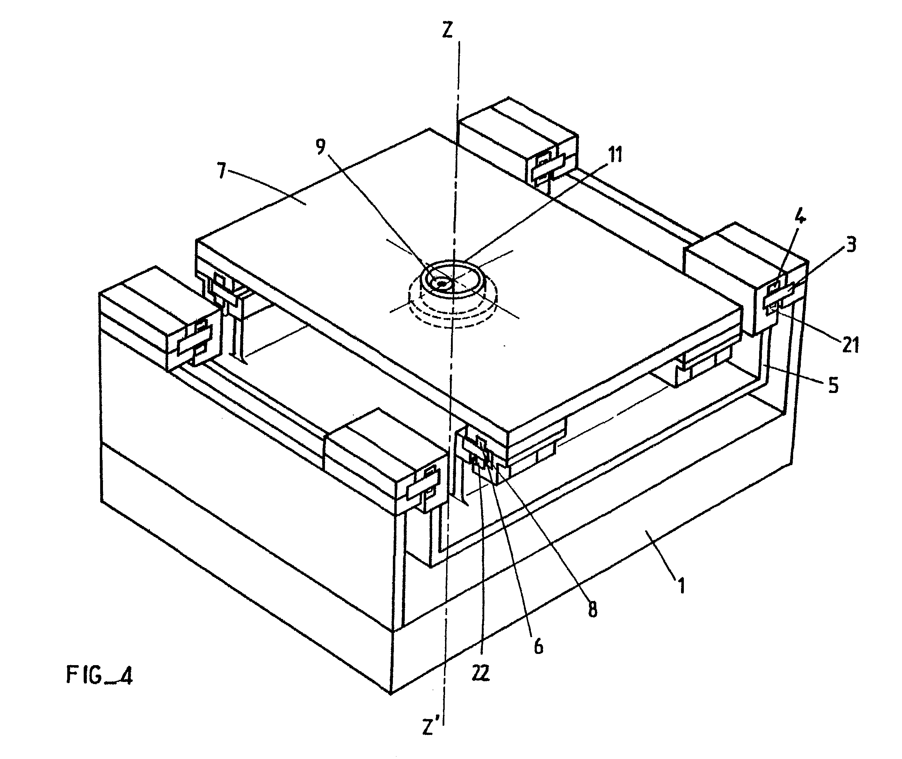

La figure 4 est une vue en perspective d'une partie de la machine donnant le mouvement orbital ; et

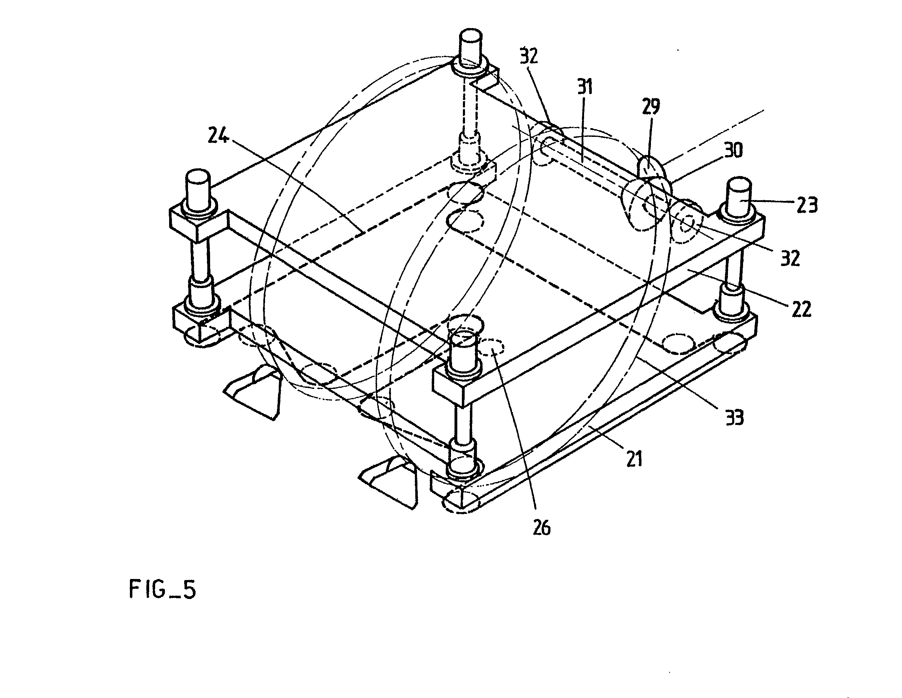

La figure 5 est un schéma en perspective de la machine illustrant la fixation du moule.

La machine comprend un bâti fixe 1 relié au sol par des vérins de fixation 2. Le bâti 1 comporte deux bandes de guidage 3 parallèles sur lesquelles roulent des patins à galet 4 solidaires d'un chariot 5.

Des patins à galet 6 solidaires d'un chariot 7 roulent sur deux bandes de guidage 8 perpendiculaires aux bandes de guidage 3 et solidaires du chariot 5.

Le mouvement est transmis aux chariots 5 et 7 par un galet 9 solidaire en rotation d'un arbre 10 et monté excentré par rapport à celui-ci. Le galet 9 coopère avec la paroi intérieure d'une couronne circulaire 11 solidaire du chariot 7 et avec une couronne circulaire solidaire du chariot 5 et ayant le même axe z, z' vertical que la couronne 11. L'arbre 10 est entraîné en rotation par un moteur 12, par l'intermédiaire d'un réducteur 13.

Le réglage de la distance du galet 9 par rapport à l'axe z, z', permet de modifier l'amplitude du mouvement du chariot 7. Il en va de même pour le chariot 5. Le réglage de la vitesse du moteur 12 permet de régler la fréquence de ces mouvements.

Le chariot 7 est relié par un roulement à rouleaux croisés à un tambour 14, la cage extérieure 15 de ce roulement étant reliée au chariot 7 et la cage intérieure 16 au tambour 14. De la sorte, le tambour 14 suit les mouvements du chariot 7, tout en pouvant effectuer indépendamment un mouvement de rotation et de basculement.

Un moteur électrique 16 à courant continu entraîne un excentrique 17. Une bielle 18 articulée sur l'excentrique 17 et sur le tambour 14, permet de faire basculer celui-ci autour de l'axe y, y'. L'amplitude du mouvement de basculement peut être réglée par la position de l'excentrique 17, tandis que la fréquence et la vitesse de ce mouvement peuvent être réglées par la vitesse variable du moteur 16 à courant continu.

Un tambour cylindrique 19 prend appui sur des galets cylindriques 20 fixés sur le tambour 14. Un porte-moule constitué d'une plaque 21 fixe et d'une plaque 22 mobile pouvant être rapprochée de la plaque 21, par vissage de vis 23 entraînées en rotation lors du vissage par une chaîne 24 mise en mouvement par un réducteur 26, est disposé à l'intérieur du tambour 19. Un moteur à courant continu 27 entraîne par un réducteur 28, un pignon conique 29 dont l'axe coïncide avec l'axe y, y'. Le pignon conique 29 engrène dans une roue conique 30 solidaire d'un arbre 31 qui supporte des pignons droits 32. Ceux-ci engrènent dans des couronnes dentées 33 portées par le tambour cylindrique 19.

La machine permet donc de donner au moule simultanément un mouvement variable de rotation par rapport à un axe x, x', un mouvement variable d'oscillation par rapport à l'axe y, y' orthogonal à l'axe x, x', ce mouvement d'oscillation pouvant éventuellement être remplacé par un mouvement de rotation, et un mouvement orbital ayant deux composantes orthogonales dans un plan horizontal; la vitesse angulaire de l'arbre 10 est supérieure aux vitesses angulaires données par les moteurs 16 et 27.

Il est possible d'obtenir le mouvement orbital par des chariots déplacés suivant des axes qui ne sont pas perpendiculaires, puisqu'on en obtient encore deux composantes de mouvement perpendiculaires entre elles.

Pour permettre l'introduction des moules dans le porte-moule, les moules sont munis de galets de guidage 34 qui coopèrent avec des rails 35 du porte-moule.

Le réducteur 26 est mis en mouvement par un moteur hydraulique 36 qui se crabote sur un arbre 37 par l'intermédiaire d'un vérin 38. Dès que le moule est serré par le porte-moule, le vérin 38 se rétracte et décrabote le moteur 36 de l'arbre 37, ce qui autorise le début du programme de fabrication d'une pièce par mise en mouvement du moule.

Les moules utilisés sont des moules en deux pièces, ayant un conduit mettant l'empreinte du moule en communication avec l'extérieur et permettant de le remplir d'un liquide polymérisable.

**Revendications**

1. Procédé de fabrication d'une pièce creuse en matière plastique, qui consiste à introduire une composition polymérisable à chaud dans un moule chaud fermé, à mettre immédiatement le moule en mouvement en lui donnant un deuxième mouvement de rotation autour d'un deuxième axe et ayant une deuxième vitesse angulaire et un troisième mouvement de basculement autour d'un troisième axe orthogonal au deuxième axe et ayant une troisième vitesse angulaire, de manière à appliquer la composition sur la paroi intérieure du moule et à l'y polymériser en une pièce creuse, caractérisé en ce qu'il consiste à mettre le moule en mouvement en lui donnant, en outre simultanément, un premier mouvement horizontal ayant, dans un plan horizontal, deux composantes dans deux directions perpendiculaires entre elles et ayant une première vitesse angulaire supérieure à l'une au moins des deuxième et troisième vitesses angulaires, de manière à mieux répartir localement la composition polymérisable.

2. Procédé suivant la revendication 1, caractérisé en ce qu'il consiste à introduire dans le moule une composition liquide.

3. Procédé suivant la revendication 2, caractérisé en ce que la matière plastiques est du polyamide, notamment du polyamide 6 ou du polyamide 12.

4. Machine de fabrication d'un pièce creuse en matière plastique qui comprend un moule et des moyens (27 à 33) pour donner au moule un deuxième mouvement de rotation par rapport à un deuxième axe (x, x') et avec une deuxième vitesse angulaire et des moyens (16 à 18) pour donner au moule un troisième mouvement de basculement par rapport à un troisième axe (y, y') orthogonal au deuxième axe et avec une troisième vitesse angulaire, caractérisée en ce qu'il comprend, en outre, des moyens destinés à donner au moule un premier mouvement horizontal ayant, dans un plan horizontal, deux composantes dans deux directions perpendiculaires entre elles et avant une première vitesse angulaire supérieure à au moins l'une des deuxième et troisième vitesses angulaires.

5. Machine suivant la revendication 4, caractérisée en ce que le mécanisme comprend un arbre (10) entraîné en rotation, un galet excentré (9) solidaire en rotation de l'arbre (10), un premier élément (5) déplacé par le galet (9) suivant une première direction, un second élément (7) déplacé par le galet (9) dans une seconde direction différente de la première, et sur lequel est fixé un porte-moule, l'agencement étant tel que le premier élément (5) entraîne avec soi le second élément (7) dans la première direction en le laissant libre de se déplacer dans la seconde direction.

6. Machine suivant les revendications 4 ou 5, caractérisée en ce que les moyens (27 à 33) et (16 à 18) comprennent des moteurs à vitesses variables.

7. Machine suivant les revendication 4, 5 ou 6, caractérisée en ce que la verticale, passant par le centre du cercle ou de l'ellipse le long duquel s'effectue le déplacement du moule suivant le premier mouvement, passe dans le moule, de façon à mieux répartir la composition polymérisable dans toutes les directions.

## Patentansprüche

1. Verfahren zum Herstellen eines hohlen Kunststoffgegenstandes, bei welchem ein in heißem Zustand polymerisierbares Material in eine geschlossene heiße Form eingebracht wird und die Form unverzüglich in Bewegung gesetzt wird, wobei man als einen zweiten Bewegungsbeitrag eine Drehbewegung um eine zweite Achse mit einer zweiten Winkelgeschwindigkeit und als einen dritten Bewegungsbeitrag eine Schwenkbewegung um eine dritte Achse mit einer dritten Winkelgeschwindigkeit verwendet, derart, daß das Material über die Innenfläche der Form gelegt wird und dort zu einem hohlen Gegenstand polymerisiert, dadurch gekennzeichnet, daß man die Form so in Bewegung setzt, daß man ihr darüber hinaus gleichzeitig einen ersten horizontalen Bewegungsbeitrag gibt, der in einer horizontalen Ebene zwei Bewegungskomponenten hat, die senkrecht aufeinander stehen, und der mit einer ersten Winkelgeschwindigkeit erfolgt, die zumindest größer ist als eine der Winkelgeschwindigkeiten, mit welcher der erste Bewegungsbeitrag bzw. der dritte Bewegungsbeitrag erfolgen, wodurch man eine bessere lokale Verteilung des polymerisierbaren Materiales erhält.

2. Verfahren nach Anspruch 1, dadurch gekennzeichnet, daß man in die Form ein flüssiges Material einbringt.

3. Verfahren nach Anspruch 2, dadurch gekennzeichnet, daß das Kunststoffmaterial ein Polyamid ist, insbesondere Polyamid 6 oder Polyamid 12.

4. Maschine zum Herstellen eines hohlen Kunststoffgegenstandes mit einer Form mit Mitteln (27 bis 33), mit welchen man der Form einen zweiten Bewegungsbeitrag in Form einer Drehbewegung um eine zweite Achse (x–x') und mit einer zweiten Winkelgeschwindigkeit erteilt, und mit Mitteln (16 bis 18), mit denen man der Form einen dritten Bewegungsbeitrag in Form einer Schwenkbewegung um eine dritte Achse (y, y'), die senkrecht auf der zweiten Achse steht und mit einer dritten Winkelgeschwindigkeit erteilt, dadurch gekennzeichnet, daß zusätzliche Mittel vorgesehen sind, durch welche man der Form einen horizontalen ersten Bewegungsbeitrag erteilt, welcher in einer horizontalen Ebene zwei Bewegungskomponenten in zwei zueinander senkrechten Richtungen aufweist und mit einer ersten Winkelgeschwindigkeit erfolgt, die zumindest größer als eine derjenigen Winkelgeschwindigkeiten ist, mit welchen der zweite Bewegungsbeitrag bzw. der dritte Bewegungsbeitrag erfolgen.

5. Maschine nach Anspruch 4, dadurch gekennzeichnet, daß der Mechanismus aufweist: eine in Drehrichtung angetriebene Welle (10), eine exzentrische Rolle (9), die drehschlüssig mit der Welle (10) verbunden ist, ein erstes Element (5), welches durch die Rolle (9) in einer ersten Richtung verlagert wird und ein zweites Element (7), welches durch die Rolle (9) in einer von der ersten Richtung verschiedenen zweiten Richtung verlagert wird und auf welchem ein Formträger befestigt ist, wobei die Anordnung so getroffen ist, daß das erste Element (5) das zweite Element (7) in der ersten Richtung mitnimmt, ihm jedoch Freiheit läßt, sich in der zweiten Richtung zu bewegen.

6. Maschine nach Anspruch 4 oder 5, dadurch gekennzeichnet, daß die Mittel (27 bis 33 und 16 bis 18) Motoren mit variabler Geschwindigkeit umfassen.

7. Maschine nach einem der Ansprüche 4 bis 6, dadurch gekennzeichnet, daß die vertikale Linie, die durch den Mittelpunkt des Kreises oder der Ellipse verläuft, längs dessen bzw. längs der das Verlagern der Form gemäß dem ersten Bewegungsbeitrag erfolgt, durch die Form verläuft, wodurch erreicht wird, daß das polymerisierbare Material in allen Richtungen besser verteilt wird.

## Claims

1. A process for producing a hollow plastics article, which comprises introducing a polymerisable composition in the hot state into a sealed hot mould, immediately setting the mould in motion by imparting to it a second movement of rotation about a second axis with a second angular speed and a third movement of oscillation about a third axis which is perpendicular to the second and with a third angular speed, so that the composition is applied to the inner walls of the mould, and polymerising it therein to form a hollow article, characterised in that it comprises setting the mould in motion by further imparting to it, simultaneously, a first horizontal movement which has, in a horizontal plane, two components in two directions perpendicular to each other, and a first angular speed which is higher than at least one of the second and third angular speeds so as to cause a better local distribution of the polymerisable composition.

2. Process as claimed in claim 1, characterised in that it comprises introducing a liquid composition into the mould.

3. Process as claimed in claim 2, wherein the plastics material is polyamide, in particular polyamide 6 or polyamide 12.

4. Apparatus for producing a hollow plastics article, which comprises a mould and means (27–33) for imparting to the mould a second movement of rotation relative to a second axis (x, x') with a second angular speed and means for imparting to the mould a third movement of oscillation relative to a third axis (y, y') at right angles to the second axis and with a third angular speed, characterised in that it further comprises means for imparting to the mould a first horizontal movement having, in a horizontal plane, two components in two directions perpendicular to each other and with a first angular speed which is higher than at least one of the second and first angular speeds.

5. Apparatus as claimed in claim 4, characterised in that the mechanism comprises a rotationally driven shaft (10), an eccentric roller (9) rotationally integral with the shaft (10), a first element (5) displaced by the roller (9) in a first direction, a second element (7) displaced by the roller (9) in a second direction different from the first, and on which there is fixed a mould holder, the arrangement being such that the first element (5) drives the second element (7) with it in the first direction, leaving it free to move in the second direction.

6. Apparatus as claimed in claims 4 or 5, characterised in that the means (27–33 and 16–18) comprise variable speed motors.

7. Apparatus as claimed in claims 4, 5 or 6, characterised in that the vertical, which passes through the centre of the circle or ellipse along which the mould is moved according to the first movement, passes through the mould so as to better distribute the polymerisable composition in every direction.

FIG_1

FIG_2

FIG_3

FIG_4

EP 0 230 174 B1

FIG_5

EP 0 230 174 B1